# EUROPEAN PATENT APPLICATION

(11) **EP 4 796 388 A1**
(43) Date of publication of application: **26.08.2026**
(21) Application number: 24820529.6
(22) Date of filing: 14.10.2024
(51) Int. Cl.: B60R 11/02

(54) **ROTARY HINGE MECHANISM AND VEHICLE ROOF-MOUNTED SCREEN**

(30) Priority: 19.10.2023 CN 202311368011
(71) Applicant: Zhejiang Leapmotor Technology Co., Ltd, Hangzhou, Zhejiang 310051 (CN)
(72) Inventor: XU, Xiong, Hangzhou, Zhejiang 310051 (CN); SONG, Jinqiang, Hangzhou, Zhejiang 310051 (CN); YU, Longsheng, Hangzhou, Zhejiang 310051 (CN); WANG, Hong, Hangzhou, Zhejiang 310051 (CN)
(74) Representative: Herrero & Asociados, S.L.
(86) International application number: PCT/CN2024/124797
(87) International publication number: WO 2025/082327

(57) **Abstract**

The present disclosure relates to the technical field of ceiling screens and is aimed to addresses the technical problem of poor damping quality and user experience of the rotary hinge of a manual ceiling screen, by providing a rotary hinge mechanism and an in-vehicle ceiling screen. The rotary hinge mechanism includes a seat body and a circular rotating shaft, the seat body being arranged with a damping member including at least one bushing. Each bushing defines a through hole, and an inner wall of the through hole is arranged with a pressure plane; the circular rotating shaft includes at least one damping shaft segment, and a peripheral side of each damping shaft segment is arranged with a shaft plane; each damping shaft segment is rotatably accommodated in the through hole of a corresponding bushing. The beneficial effect of the present disclosure lies in the fact that when the damping shaft segment rotates to the extent that the shaft plane comes into contact with the pressure plane of the inner wall of the bushing, a rotational torque is generated between the two planes, which achieves a multi-stage change in the rotational torque of the rotational hinge mechanism, resulting in a better rotational damping feel and improving the user experience.

## Description

The present disclosure claims priority of Chinese Patent Application No. 202311368011.0, in the title of "ROTARY HINGE MECHANISM AND IN-VEHICLE CEILING SCREEN", filed on October 19, 2023, the entire contents of which are hereby incorporated by reference in their entirety.

### TECHNICAL FIELD

The present disclosure relates to the technical field of ceiling screens, and in particular to a rotary hinge mechanism and an in-vehicle ceiling screen.

### BACKGROUND

In recent years, new energy vehicles have gradually gained momentum, and in-vehicle entertainment functions have rapidly become popular. Consequently, a technical solution of in-vehicle ceiling screens is gradually gaining market favor.

Electric ceiling screens bring about a good user experience, but their high cost is not conducive to their widespread use in vehicles of all classes. Manual ceiling screens have relatively low cost, but most of them use a relatively low-end rotary hinge mechanism. As a result, although the price of the manual ceiling screens is low, the damping feel is poor and the full-stroke operating force during manual opening is large, which is uncomfortable and gives users a poor impression of low quality, affecting the user's overall experience. The application of a relatively high-end rotary hinge mechanism, such as a hydraulic damping hinge, can improve the user experience when manually opening the screen, but this kind of rotary hinge mechanism has a more complex structure, with higher the production and acquisition costs, which does not meet the low-cost requirements of the manual ceiling screen. In addition, the complex structural design results in a relatively high failure rate, and the user's subsequent use and maintenance costs are thus relatively higher.

Therefore, the rotary hinge mechanism adopted in the existing in-vehicle ceiling screens is urgently required to be improved to overcome the above technical problems.

### SUMMARY OF THE DISCLOSURE

In order to solve the above technical problems, the present disclosure provides a rotary hinge mechanism to generate a rotational torque that can change with the rotation angle, and an in-vehicle ceiling screen arranged with the rotary hinge mechanism.

In a first aspect, the present disclosure provides a rotary hinge mechanism, including:
a seat body, arranged with a damping member; where the damping member includes at least one bushing, each of the at least one bushing defines a through hole, and an inner wall of the through hole is arranged with a pressure surface; and
a circular rotating shaft, including at least one damping shaft segment; where a peripheral side of each of the at least one damping shaft segment is arranged with a shaft plane;
where each of the at least one damping shaft segment is rotatably accommodated in the through hole of a corresponding bushing, and is rotatable to cause the shaft plane to slide against the pressure plane of the corresponding bushing and generate a rotational torque.

In some embodiments, the number of the at least one damping shaft segment is N, N being greater than or equal to 2, and the at least one damping shaft segment are arranged successively at intervals along an axis of the circular rotating shaft;
the shaft planes of the at least one damping shaft segment are arranged in a misaligned manner;
the number of the at least one bushing is N, and each of the at least one bushing wraps a corresponding damping shaft segment.

In some embodiments, along an extension direction of axis of the circular rotating shaft, the shaft planes of the at least one damping shaft segment are distributed in a spiral arrangement around the axis of the circular rotating shaft.

In some embodiments, along an extension direction of axis of the circular rotating shaft, with a horizontal plane that passes through the axis as a reference plane, an inclination angle of the shaft planes of the at least one damping shaft segment relative to the reference plane gradually increases or decreases.

In some embodiments, along an extension direction of axis of the circular rotating shaft, an area of the shaft planes of the at least one damping shaft segment gradually increases or decreases.

In some embodiments, the rotary hinge mechanism further includes a lock washer;
the lock washer is fixedly disposed on the circular rotating shaft;
an outer wall of the lock washer defines a positioning groove;
the seat body further includes a limiting component; the limiting component elastically abuts against the outer wall of the lock washer and is capable of being snapped into the positioning groove in condition of the lock washer rotating to a predetermined angle.

In some embodiments, the limiting component includes an elastic member and a positioning bead connected to the elastic member; the elastic member is configured to automatically drive the positioning bead to elastically abut against the outer wall of the lock washer;
the positioning bead is configured to slide into the positioning groove in condition of the lock washer rotating to the predetermined angle together with the circular pivot.

In some embodiments, the limiting component includes a limit reed;
the limit reed includes a fixed portion, an elastic abutting portion formed by bending and extending the fixed portion, where the fixed portion is fixedly connected to the seat body, and the elastic abutting portion elastically abuts against the outer wall of the lock washer;
the elastic abutting portion slides into the positioning groove in condition of the lock washer rotating to the predetermined angle together with the circular pivot.

In some embodiments, a limit boss is arranged on an end of the circular rotating shaft that is rotatably connected to the seat body, and a stop boss is arranged on the seat body;
in condition of the circular rotating shaft rotating to a preset angle, the limit boss abuts against the stop boss to prevent the circular rotating shaft from continuing to rotate.

In another aspect, the present disclosure provides an in-vehicle ceiling screen, configured to be arranged on a roof of a vehicle and including: a screen base, fixed to the roof; a display screen; and the rotary hinge mechanism as above; where the display screen is rotatably connected to the screen base by means of the rotary hinge mechanism;
where the seat body is fixedly connected to one of the screen base and the display screen, and the circular rotating shaft is fixedly connected to the other of the screen base and the display screen.

The beneficial effects of the present disclosure are: The present disclosure provides a rotary hinge mechanism and an in-vehicle ceiling screen. The rotary hinge mechanism includes a seat body and a circular rotating shaft, the seat body being arranged with a damping member including at least one bushing. Each bushing defines a through hole, and an inner wall of the through hole is arranged with a pressure plane; the circular rotating shaft includes at least one damping shaft segment, and a peripheral side of each damping shaft segment is arranged with a shaft plane; each damping shaft segment is rotatably accommodated in the through hole of a corresponding bushing. Compared with a conventional hinge structure, the rotary hinge mechanism provided by the present disclosure, when the circular rotating shaft rotates, causes the shaft plane on each damping shaft segment to slide against the pressure plane on the corresponding bushing, such that the contact plane of each damping shaft segment and the corresponding bushing generates a variable rotational torque, achieving a multi-stage change in the rotational torque of the rotary hinge mechanism, which may bring a better rotational damping fee, and significantly enhance the user experience when the rotary hinge mechanism is applied to a manual in-vehicle ceiling screen.

In addition, the proposed rotary hinge mechanism has a relatively simple structure, and its production and purchase costs and failure rate are lower. When applied to the manual in-vehicle ceiling screen, the proposed rotary hinge mechanism not only significantly reduces the cost of the ceiling screen, but also ensures the user experience, which is conducive to its wide application in vehicles of all classes.

### BRIEF DESCRIPTION OF THE DRAWINGS

In order to more clearly illustrate the technical solution in the embodiments of the present disclosure, a brief description of the drawings needed for use in the embodiments is provided below. Obviously, the drawings described below are only some embodiments of the present disclosure, and for those skilled in the art, other drawings can be obtained without the expenditure of creative effort.
FIG. 1 is a cross-sectional schematic view of an overall structure of a rotatory hinge mechanism according to some embodiments of the present disclosure, where the rotatory hinge mechanism includes a seat body, a circular rotating shaft, and a damping member.
FIG. 2 is a perspective schematic view of an overall structure of a rotatory hinge mechanism according to some embodiments of the present disclosure.
FIG. 3 is a structural schematic view of the damping member, after being unfolded, in FIG. 1.
FIG. 4 is a structural schematic view of the circular rotating shaft in FIG. 1.
FIG. 5 is a perspective schematic view of an assembled structure of the circular rotating shaft and the damping member in FIG. 1.
FIG. 6 is a front view of an assembled structure of the circular rotating shaft and the damping member in FIG. 1.
FIG. 7 is a cross-sectional structure view of the circular rotating shaft in FIG. 1;
FIG. 8 is a cross-sectional structure view of the circular rotating shaft and the damping member in FIG. 1.
FIG. 9 is a partial cross-sectional view on one end of the rotatory hinge mechanism in FIG. 2.
FIG. 10 is a partial cross-sectional view on the other end of the rotatory hinge mechanism in FIG. 2.
FIG. 11 is an exploded structural schematic view of an in-vehicle ceiling screen according to some embodiments of the present disclosure.

Reference numerals: 100. rotary hinge mechanism, 101. mounting plate, 10. axis, 20. reference surface, 1. seat body, 11. cavity, 12. mounting groove, 13. stop boss, 2. circular rotating shaft, 21. damping shaft segment, 211. shaft plane, 22. initial shaft segment, 23. limit boss, 3. damping member, 30. elastic steel plate, 301. slot, 31. bushing, 311. pressure surface, 32. initial bushing, 4. lock washer, 41. positioning groove, 411. first positioning groove, 412. second positioning groove, 5. positioning bead structure, 51. stud, 52. elastic element, 53. positioning bead, 6. limit reed, 61. fixed portion, 62. elastic abutting portion, 7. screen base, 71. base fixing plate, 72. ornamental inner panel, 8. display screen, 9. locking mechanism.

### DETAILED DESCRIPTION

The following description of the technical solutions in the embodiments of the present disclosure is presented clearly and completely with reference to the accompanying drawings in the embodiments of the present disclosure. It is apparent that the embodiments described are only some embodiments of the present disclosure and not all of the embodiments. All other embodiments obtained by those skilled in the art without creative effort based on the embodiments in the present disclosure fall within the scope of the present disclosure.

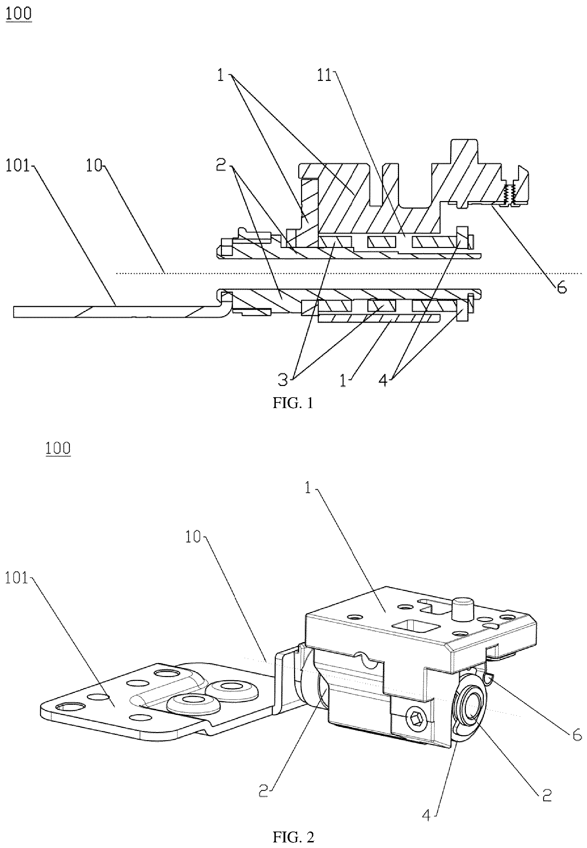

As illustrated in FIGS. 1 to 6, one aspect of the present disclosure provides a rotary hinge mechanism 100, which includes a seat body 1 and a circular rotating shaft 2. The seat body 1 defines a cavity 11 passing through a main body of the seat body 1, and a damping member 3 is fixedly connected in the cavity 11.

The damping member 3 includes at least one bushing 31. Each bushing 31 defines a through hole (not shown), and a pressure plane 311 is arranged on an inner wall of the through hole, where a distance between the pressure plane 311 and an axis 10 of the through hole is less than half of an inner diameter of the through hole, such that the pressure plane 311 forms a planar structure that intrudes into the inner side of the through hole relative to an curved inner wall of the through hole.

The circular rotating shaft 2 is of a cylindrical structure, coaxially rotatable and connected in the at least one bushing 31 of the damping member 3. Along an extension direction of the axis 10, the circular rotating shaft 2 includes at least one damping shaft segment 21, and a shaft plane 211 is arranged on a peripheral side of each damping shaft segment 21, where a distance between the shaft plane 211 and the axis 10 of the circular rotating shaft 2 is less than a radius of the damping shaft segment 21, such that the shaft plane 211 forms a planar structure that intrudes towards the inner side of the damping shaft segment 21 relative to a curved outer wall of the damping shaft segment 21.

Each damping shaft segment 21 is rotatably accommodated in the through hole of a corresponding bushing 31, and the damping shaft segment 21 is configured to rotate until the shaft plane 211 slides against the pressure plane 311 and generate a rotational torque.

Compared with a conventional hinge structure, the rotary hinge mechanism provided in the present disclosure can cause the shaft plane 211 on each damping shaft segment 21 to slide against the pressure plane 311 on a corresponding bushing 31 when the circular rotating shaft 2 rotates, such that a variable rotational torque is generated between a contact plane of each damping shaft segment 21 and the corresponding bushing 31, thereby achieving a multi-stage change in the rotational torque of the rotary hinge mechanism 100, which may provide a better rotational damping feel and significantly improve the user experience when the rotary hinge mechanism is applied to a manual in-vehicle ceiling screen.

In addition, the rotary hinge mechanism provided by the present disclosure has a relatively simple structure, and its production and acquisition costs and failure rate are lower. When applied to a manual in-vehicle ceiling screen, the rotary hinge mechanism not only significantly reduces the cost of the ceiling screen, but also ensures the user experience, which is conducive to its wide application in vehicles of all classes.

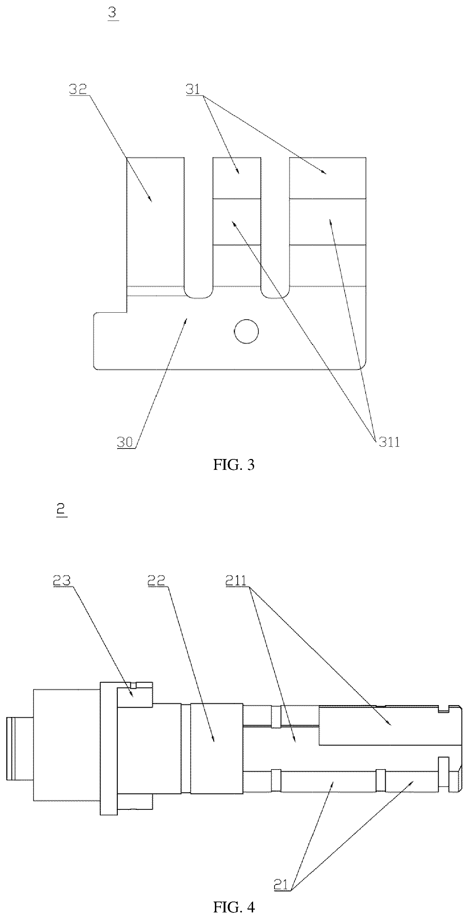

As illustrated in FIGS. 3 to 5, and 8, in some embodiments of the present disclosure, the damping member 3 is formed by punching an elastic steel plate 30 and then winding it from one end to the other end, such that each of the at least one bushing 31 forms a wrap-around spring structure defining a slot 301. After actual assembly, a side end, of the elastic steel plate 30, that is wound can be moderately opened and deformed outwardly in the receiving cavity 11, and the other side end of the elastic steel plate 30 is fixedly connected to the seat body 1. When the circular rotating shaft 2 rotates around the axis 10 relative to the damping member 3 until the shaft plane 211 slides against the corresponding pressure plane 311, the bushing 31 is elastically deformed and moderately opened after being pressed by the corresponding damping shaft segment 21, such that the circular rotating shaft 2 can continue to rotate around the axis 10 and a variable rotational torque is thus generated on the contact plane.

It should be noted that the above embodiments are only some implementations of the damping member 3 of the present disclosure, which is not intended to limit the present disclosure. In other embodiments, the damping member 3 may be designed into other suitable structures.

In some embodiments, the circular rotating shaft 2 includes two damping shaft segments 21, which are arranged successively at intervals along the extension direction of the axis 10 of the circular rotating shaft 2, and the shaft planes 211 of the two damping shaft segments 21 are arranged in a misaligned manner.

Correspondingly, the damping member 3 includes two bushings 31, and each bushing 31 wraps around a corresponding damping shaft segment 21. In some embodiments, the pressure planes 311 on the bushings 31 are arranged on the same side of the axis 10. As the rotation angle of the circular rotating shaft 2 around the axis 10 increases, the shaft planes 211 of the two damping shaft segments 21 will first and then slide against the corresponding pressure planes 311, causing the rotational torque between each damping shaft segment 21 and the corresponding bushing 31 to be generated and superimposed step by step, thereby producing a damping feel with multi-stage changes and improving the user experience.

In the above embodiments, two bushings 31 are provided to wrap two damping shaft segments 21 for illustrative purposes. In other embodiments, the number of the damping shaft segments 21 and the corresponding bushings 31 may be greater than two. The greater the number of the above elements, the greater the number of torque change stages of the rotary hinge mechanism 100, and thus the transition between the torques at each stage will be smoother. The specific settings may be adjusted accordingly as needed during actual manufacturing.

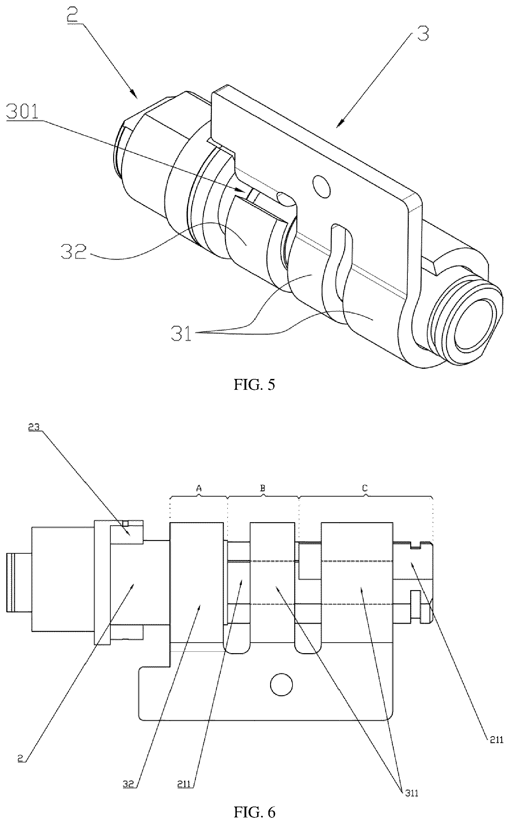

As illustrated in FIGS. 4 and 6, in some embodiments of the present disclosure, along the extension direction of the axis 10 of the circular rotating shaft 2, the shaft planes 211 of the damping shaft segments 21 are distributed in a spiral arrangement. Such a structural design causes the shaft planes 211 of the damping shaft segments 21 to change gradually, thereby ensuring that the rotational torque between each damping shaft segment 21 is generated and changed gradually, resulting in a damping feel with multi-stage changes.

In some embodiments of the present disclosure, the shaft plane 211 is produced by cutting the curved outer wall of the circular rotational shaft 2 along the extension direction of the axis 10; along the extension direction of the axis 10, the rotational shaft planes 211 each start from their corresponding damping shaft segments 21 and extend to the last damping shaft segment 21 of the circular rotating shaft 2 thoroughly, such that the shaft planes 211 of the damping shaft segments 21 are arranged in a spiral around the axis 10, with the shaft planes 211 of each adjacent two damping shaft segments 21 sharing a portion of intersecting side edges. This structural design facilitates the processing of the circular rotating shaft 2 and reduces the manufacturing cost of the rotary hinge mechanism 100. In addition, the shared intersecting side edges between the shaft planes 211 enable a smooth transition and change between adjacent rotational moments, thereby further enhancing the damping feel of the rotary hinge mechanism 100.

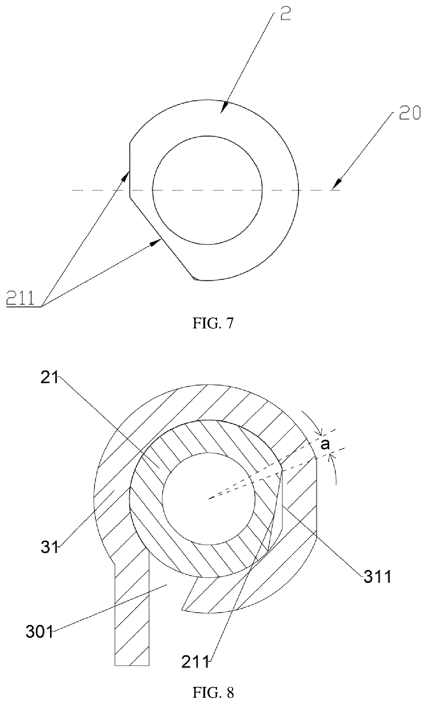

As illustrated in FIGS. 4 and 7, in some embodiments of the present disclosure, along the extension direction of the axis 10 of the circular rotating shaft 2, with a horizontal plane that passes through the axis 10 as a reference plane 20, an inclination angle of the shaft planes 211 of the damping shaft segments 21 relative to the reference plane 20 gradually increases or decreases. This structural design causes the shaft plane 211 of each damping shaft segment 21 to gradually change in a stepwise gradient manner, ensuring that the rotational torque between each damping shaft segment 21 and the corresponding bushing 31 is generated gradually and changes in a gradient manner, thereby ensuring the smoothness of the generation and change of the multi-stage rotational damping, and thus further enhancing the damping feel.

As illustrated in FIGS. 4 and 7, in some embodiments of the present disclosure, the area of the shaft planes 211 of the damping shaft segments 21 gradually increases or decreases along the extension direction of the axis 10 of the circular rotating shaft 2. Since the shaft plane 211 is formed by cutting the peripheral side of the circular rotational shaft 2, the larger the area of the shaft plane 211, the larger the contact plane of the shaft plane 211 with the pressure plane 311 of the corresponding bushing 31, and thus the greater the sliding friction damping generated between the shaft plane 211 and the pressure plane 311. Combined with the rotational torque generated by the damping shaft segment 21 abutting against the bushing 31, the sliding friction damping may cause the rotational damping between each damping shaft segment 21 and the corresponding bushing 31 to change in a significantly gradient manner, thereby ensuring a gradual change in the multi-stage rotational damping of the rotary hinge mechanism 100.

As illustrated in FIGS. 3 to 8, in some embodiments of the present disclosure, the circular rotating shaft 2 further includes an initial shaft segment 22 without a shaft plane 211, and the damping shaft segments 21 are arranged successively at intervals along the extension direction of the axis 10 starting from this initial shaft segment 22. Correspondingly, the damping member 3 further includes an initial bushing 32 without a pressure surface 311, and the bushings 31 are arranged at intervals along the extension direction of the axis 10 starting from the initial bushing 32. When the circular rotating shaft 2 is rotatably accommodated in the damping member 3, the initial bushing 32 elastically surrounds the initial shaft segment 22, and each bushing 31 successively surrounds a corresponding damping shaft segment 21.

For the purpose of explaining the multi-stage damping change principle of the rotary hinge mechanism 100 of the present disclosure, a set of the initial shaft segment 22 and the initial bushing 32 is defined as a first-stage damping section A below, and a set of each subsequent damping shaft segment 21 and its corresponding bushing 31 is successively defined as a second-stage damping section B and a third-stage damping section C.

The rotary hinge mechanism 100 in the illustrated embodiments includes three damping change sections, which may achieve the effect of the three-stage rotational damping of the hinge mechanism being generated and superimposed stage by stage. In the first-stage damping section A, during the entire rotation of the circular rotating shaft 2, a curved outer wall of the initial shaft segment 22 slides against a curved inner wall of the initial bushing 32, and the friction between the initial shaft segment 22 and the initial bushing 32 generates a continuous and stable rotational torque M1.

As illustrated in FIG. 8, in an early stage of rotation of the circular rotating shaft 2 (within a rotation angle range of a, the shaft plane 211 rotates from a state where the shaft plane 2 faces the pressure plane 311 to a state where a side of the shaft plane 211 abuts against the pressure plane 311) in the second-stage damping section B, the curved outer wall of the damping shaft segment 21 comes into contact and rubs against the curved inner wall of the corresponding bushing 31, and the shaft plane 211 of the damping shaft segment 21 has not yet contacted the pressure plane 311 of the corresponding bushing 31, in which case the rotational torque generated by the second-stage damping section B is M2. Since the curved outer wall of the damping shaft segment 21 is partially cut and forms the corresponding shaft plane 211, and a corresponding region on the inner wall of the through hole of the corresponding bushing 31 is flattened to form the corresponding pressure plane 311, when the circular rotating shaft 2 rotates clockwise with the rotation angle reaching a, the shaft plane 211 of the damping shaft segment 21 slides against the corresponding pressure plane 311 to generate a friction moment, in which case the rotational torque increases to M3, and M3>M2.

In an early stage of rotation of the circular rotating shaft 2 in the third-stage damping section C, the curved outer wall of the damping shaft segment 21 comes into contact and rubs against the curved inner wall of the corresponding bushing 31. The structure is the same as in the secondary damping zone B, and the resulting rotational moment is M4. In a subsequent stage of rotation of the circular rotating shaft 2 in the third-stage damping section C, since the shaft plane 211 of the third-stage damping section C is set misaligned with the shaft plane 211 of the second-stage damping section B, the shaft plane 211 of the damping shaft 21 of the third-stage damping section C slides against the corresponding pressure plane 311 to generate a friction moment, in which case the rotational moment increases to M5, and M5>M4.

In summary, during the rotation of the circular rotating shaft 2, the three levels of rotational torque increase from small to large in the following order: (M1+M2+M4), (M1+M3+M4), (M1+M3+M5), which achieves a gradual change in the rotational torque of the damping sections in different stages of the rotary hinge mechanism 100, thereby ensuring a smooth increase in multi-stage rotational damping and significantly improving the user's comfort.

Referring to FIGS. 1 to 2, and 9, in some embodiments of the present disclosure, the rotary hinge mechanism 100 further includes a lock washer 4 and a limiting component cooperating with the lock washer 4. The lock washer 4 has a disc-shaped structure, is coaxially fixedly connected to an end of the circular rotating shaft 2, and is exposed outside the damping member 3, and the lock washer 4 is rotatable synchronously with the circular rotating shaft 2 around the axis 10. A positioning groove 41 is defined on a curved outer wall of the lock washer 4.

A mounting groove 12 is defined on the seat body 1, the limiting component is accommodated in the mounting groove 12 and fixedly connected to the seat body 1, and the limiting component elastically abuts against the outer wall of the lock washer 4 and can snap into the positioning groove 41 when the lock washer 4 is rotated to a predetermined angle, thereby generating a locking indication feel to remind the user that the circular rotating shaft 2 has been rotated into place. In addition, to a certain extent, the above design serves to lock the circular rotating shaft 2, thereby enhancing the user experience.

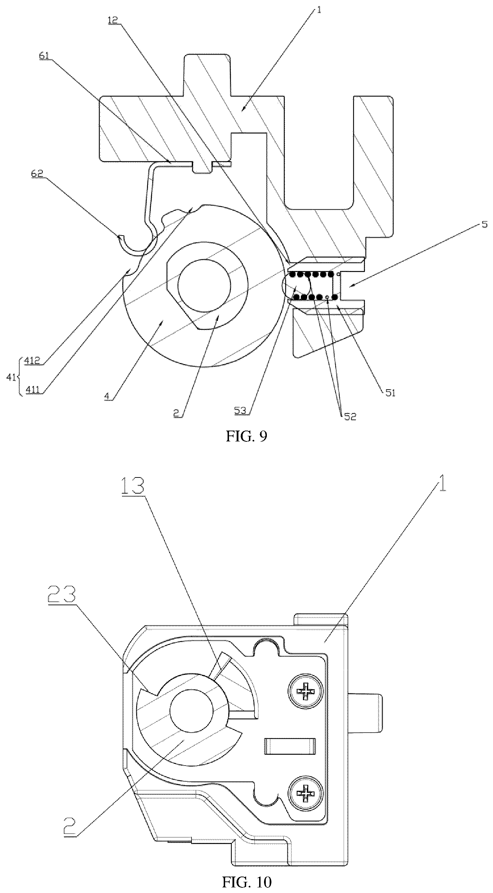

As illustrated in FIG. 9, in some embodiments of the present disclosure, the limiting component includes a positioning bead structure 5, which is screw-fixed and positionally adjustable and is assembled in the mounting groove 12 of the seat body 1. The positioning bead structure 5 includes a stud 51 having an inner cavity and an open end, an elastic member 52 (e.g., a compression spring) accommodated in the inner cavity of the stud 51, and a positioning bead 53 that is movably connected to the elastic member 52 and is disposed at the open end of the inner cavity of the stud 51. In a normal state, the elastic member 52 automatically drives the positioning bead 53 to elastically abut against the outer wall of the lock washer 4.

When the lock washer 4 is rotated to a predetermined angle with the circular rotating shaft 2, the positioning bead 53 of the positioning bead structure 5 slides into the positioning groove 41, forming a resistance to the rotation of the locking cushion 4, thereby achieving a locking indication of the coaxially-arranged circular rotating shaft 2, so as to remind the user that the circular rotating shaft 2 has been rotated to a locked position and the rotary hinge mechanism 100 is in place to open/close.

As illustrated in FIGS. 1, 2 and 9, in some embodiments of the present disclosure, the limiting component includes a limit reed 6, the limit reed 6 including a fixed portion 61 and an elastic abutting portion 62 formed by bending and extending the fixed portion 61. The fixed portion 61 is fixedly connected to the seat body 1, and the elastic abutting portion 62 elastically abuts against the outer wall of the lock washer 4.

When the lock washer 4 rotates to a predetermined angle with the circular rotating shaft 2, the elastic abutting portion 62 of the limit reed 6 slides into the positioning groove 41, forming a resistance to the rotation of the lock washer 4, thereby achieving a locking indication of the coaxially-arranged circular rotating shaft 2, so as to remind the user that the circular rotating shaft 2 has been rotated to a locked position and the rotary hinge mechanism 100 is in place to open/close.

The limiting component of the rotary hinge mechanism 100 may be either the positioning bead structure 5 or the limit reed 6, as long as the locking indication of the circular rotating shaft 2 is achieved.

Of course, the limiting component may include both the positioning bead structure 5 and the limit reed 6. As illustrated in FIG. 9, the positioning groove 41 is divided into two, including a first positioning groove 411 and a second positioning groove 412, where the positioning bead structure 5 may be configured to slide to the first positioning groove 411 when the circular rotating shaft 2 rotates to a minimum/maximum rotation angle, so as to provide a locking indication. Correspondingly, the limit spring 6 may be configured to slide to the second positioning groove 412 when the circular rotating shaft 2 rotates to a maximum/minimum rotation angle, so as to provide a locking indication. In this way, a double locking indication function for the opening and closing of the rotary hinge mechanism 100 in place may be achieved, which further improves the user experience.

As illustrated in FIG. 10, in some embodiments of the present disclosure, a limit boss 23 is arranged on an end of the circular rotating shaft 2 that is rotatably connected to the seat body 1, and a corresponding stop boss 13 is arranged on a corresponding position of the seat body 1.

When the circular rotating shaft 2 is rotated to a maximum preset opening angle of the rotary hinge mechanism 100, the limit boss 23 abuts against the stop boss 13 to prevent the circular rotating shaft 2 from continuing to rotate. With the above-mentioned limiting component design, the maximum opening angle of the rotary hinge mechanism 100 can be positioned and locked, thereby preventing the hinge from opening excessively, and thus ensuring the reliability of the hinge mechanism and improving the user experience.

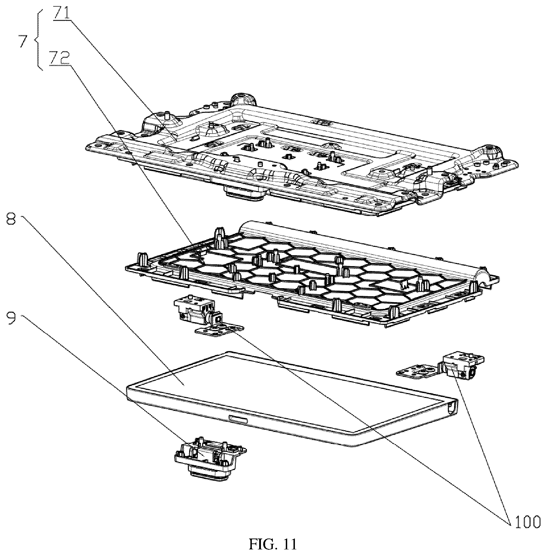

As illustrated in FIGS. 1 and 11, to solve the above technical problem, another aspect of the present disclosure provides an in-vehicle ceiling screen. The ceiling screen includes a screen base 7, a display screen 8, the rotary hinge mechanism 100 as described above, and a locking mechanism 9. The screen base 7 includes a base fixing plate 71 and an ornamental inner panel 72 that are snap-fitted together; the display screen 8 is rotatably connected to the screen base 7 by means of the rotary hinge mechanism 100 arranged on a hinge mounting position 73 to achieve opening and closing (i.e., to switch between an overlapped state, where the display screen 8 and the screen base 7 are overlapped, and an un-overlapped state); the locking mechanism 9 is fixed to the middle of a side of the screen base 7 away from the rotary hinge mechanism 100. The seat body 1 is fixedly connected to the screen base 7, the circular rotating shaft 2 is fixedly connected to the display screen 8 through the mounting plate 101, which is fixedly connected to an end of the circular rotating shaft 2, and the screen locking mechanism 9 is configured to close the display screen 8 on a side away from the rotary hinge mechanism 100 and fixes the display screen 8 to the screen base 7.

In a usage process, after the user unlocks the locking mechanism 9, the display screen 8 can be manually flipped, during which the display screen 8 drives the circular rotating shaft 2 to rotate around the axis 10 through the mounting plate 101, and a multi-stage, gradient-type changing rotational torque is generated under the action of each damping shaft segment 21 and a corresponding bushing 31, thereby significantly improving the damping feel during the manual opening of the ceiling screen, so as to bring a better user experience, and reducing the manufacturing cost of the ceiling screen, which is conducive to its wide application in vehicles of all classes.

The above is some embodiments of the present disclosure, which does not thereby limit the scope of the present disclosure. Any equivalent structure or equivalent process transformation made using the content of the description and drawings of the present disclosure, or directly or indirectly applied in other related technical fields, is similarly included in the scope of the present disclosure.

## Claims

1. A rotary hinge mechanism, **characterized by** comprising:
a seat body (1), arranged with a damping member (3); wherein the damping member (3) comprises at least one bushing (31), each of the at least one bushing (31) defines a through hole, and an inner wall of the through hole is arranged with a pressure surface (311); and
a circular rotating shaft (2), comprising at least one damping shaft segment (21); wherein a peripheral side of each of the at least one damping shaft segment (21) is arranged with a shaft plane (211);
wherein each of the at least one damping shaft segment (21) is rotatably accommodated in the through hole of a corresponding bushing (31), and is rotatable to cause the shaft plane (211) to slide against the pressure plane (311) of the corresponding bushing (31) and generate a rotational torque.

2. The rotary hinge mechanism according to claim 1, wherein the number of the at least one damping shaft segment (21) is N, N being greater than or equal to 2, and the at least one damping shaft segment (21) are arranged successively at intervals along an axis of the circular rotating shaft (2);
the shaft planes (211) of the at least one damping shaft segment (21) are arranged in a misaligned manner;
the number of the at least one bushing (31) is N, and each of the at least one bushing (31) wraps a corresponding damping shaft segment (21).

3. The rotary hinge mechanism according to claim 2, wherein along an extension direction of axis of the circular rotating shaft (2), the shaft planes (211) of the at least one damping shaft segment (21) are distributed in a spiral arrangement around the axis of the circular rotating shaft (2).

4. The rotary hinge mechanism according to claim 2 or 3, wherein along an extension direction of axis of the circular rotating shaft (2), with a horizontal plane that passes through the axis as a reference plane, an inclination angle of the shaft planes (211) of the at least one damping shaft segment (21) relative to the reference plane gradually increases or decreases.

5. The rotary hinge mechanism according to claim 2 or 3, wherein along an extension direction of axis of the circular rotating shaft (2), an area of the shaft planes (211) of the at least one damping shaft segment (21) gradually increases or decreases.

6. The rotary hinge mechanism according to claim 2 or 3, wherein the rotary hinge mechanism further comprises a lock washer (4);
the lock washer (4) is fixedly disposed on the circular rotating shaft (2);
an outer wall of the lock washer (4) defines a positioning groove (41);
the seat body (1) further comprises a limiting component; the limiting component elastically abuts against the outer wall of the lock washer (4) and is capable of being snapped into the positioning groove (41) in condition of the lock washer (4) rotating to a predetermined angle.

7. The rotary hinge mechanism according to claim 6, wherein the limiting component comprises an elastic member (52) and a positioning bead (53) connected to the elastic member (52); the elastic member is configured to automatically drive the positioning bead (53) to elastically abut against the outer wall of the lock washer (4);
the positioning bead (53) is configured to slide into the positioning groove (41) in condition of the lock washer (4) rotating to the predetermined angle together with the circular pivot (2).

8. The rotary hinge mechanism according to claim 6, wherein the limiting component comprises a limit reed (6);
the limit reed (6) comprises a fixed portion (61), an elastic abutting portion (62) formed by bending and extending the fixed portion (61), wherein the fixed portion (61) is fixedly connected to the seat body (1), and the elastic abutting portion (62) elastically abuts against the outer wall of the lock washer (4);
the elastic abutting portion (62) slides into the positioning groove (41) in condition of the lock washer (4) rotating to the predetermined angle together with the circular pivot (2).

9. The rotary hinge mechanism according to claim 2 or 3, wherein a limit boss (23) is arranged on an end of the circular rotating shaft (2) that is rotatably connected to the seat body (1), and a stop boss (13) is arranged on the seat body (1);
in condition of the circular rotating shaft rotating to a preset angle, the limit boss (23) abuts against the stop boss (13) to prevent the circular rotating shaft (2) from continuing to rotate.

10. An in-vehicle ceiling screen, configured to be arranged on a roof of a vehicle and comprising:
a screen base (7), fixed to the roof;
a display screen (8); and
the rotary hinge mechanism according to any one of claims 1-9; wherein the display screen (8) is rotatably connected to the screen base (7) by means of the rotary hinge mechanism;
wherein the seat body (1) is fixedly connected to one of the screen base (7) and the display screen (8), and the circular rotating shaft (2) is fixedly connected to the other of the screen base (7) and the display screen (8).
